# EUROPEAN PATENT APPLICATION

(11) **EP 3 470 783 A2**
(43) Date of publication of application: **17.04.2019**
(21) Application number: 18195651.7
(22) Date of filing: 20.09.2018
(51) Int. Cl.: G01C 15/00, E01C 19/00

(54) **AUTOMATIC GRADING SYSTEMS AND RELATED METHODS FOR PERFORMING GRADING OPERATIONS**

(30) Priority: 22.09.2017 US 201715712299
(71) Applicant: CNH Industrial Italia S.p.A., 10135 Torino (IT)
(72) Inventor: ELKINS, Scott A., Plainfield, IL 60586 (US)
(74) Representative: CNH Industrial IP Department

(57) **Abstract**

A method for automatically grading a worksite using a grading vehicle may include receiving sensor data associated with detecting a light beam emitted from a light-emitting device positioned at the worksite, wherein the sensor data is received from at least one sensor installed on the grading vehicle. In addition, the method may include determining a relative horizontal distance between the grading vehicle and the light-emitting device based on the sensor data and determining a relative worksite position of the grading vehicle at the worksite based on the relative horizontal distance. Moreover, the method may include actively adjusting a position of a grading implement of the grading vehicle based on the relative worksite position of the grading vehicle to allow the worksite to be graded as the grading vehicle is moved relative to the light-emitting device across the worksite.

## Description

### FIELD OF THE INVENTION

The present subject matter relates generally to automatic grading systems and related methods for performing grading operations and, more particularly, to a system and method for automatically grading a worksite using a grading machine based on the detection of a relative distance between the grading machine and a light-emitting device positioned at the worksite.

### BACKGROUND OF THE INVENTION

Grading vehicles, such as bulldozers or other crawler-tractors, are typically equipped with a blade for scraping the ground or pushing material along the ground. The blade is pivotally connected to the chassis of the grading vehicle such that it can pivot up and down. Additionally, blade controls are often provided to the operator in the cab of the vehicle for raising and lowering the blade with respect to the chassis of the vehicle. One of the most common uses for blades on grading vehicles is to level or otherwise grade the ground for construction of houses, buildings, parking lots, and roads.

Various different systems have been developed in the past for automatically grading a surface. For example, conventional two-dimensional grading systems utilize a rotating laser that is sensed by an array of sensors on the machine to indicate the vertical position of the blade relative to the desired grade. However, such systems only allow for simple two-dimensional grading to be achieved, where a flat plane can be created along a desired slope. As a result, conventional two-dimensional systems do not allow for a more complex graded surface to be achieved, such as a surface with a varying slope along the grading path of the vehicle. To address this issue, three-dimensional grading systems are now available that utilize GPS-based devices to acquire a coordinate location of the grading vehicle relative to the earth's surface. However, such systems are relatively complex and are quite expensive.

Accordingly, an improved grading system and method that allows for more complex graded surfaces to be achieved than with conventional two-dimensional grading systems while avoiding the complexity and expense of conventional three-dimensional grading systems would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, the present subject matter is directed to a method for automatically grading a worksite using a grading vehicle. The method may include receiving, with a computing device, sensor data associated with detecting a light beam emitted from a light-emitting device positioned at the worksite, wherein the sensor data is received from at least one sensor installed on the grading vehicle. In addition, the method may include determining, with the computing device, a relative horizontal distance between the grading vehicle and the light-emitting device based on the sensor data and determining, with the computing device, a relative worksite position of the grading vehicle at the worksite based on the relative horizontal distance. Moreover, the method may include actively adjusting, with the computing device, a position of a grading implement of the grading vehicle based on the relative worksite position of the grading vehicle to allow the worksite to be graded as the grading vehicle is moved relative to the light-emitting device across the worksite.

In another aspect, the present subject matter is directed to a system for automatically grading a worksite. The system may generally include a grading vehicle having a grading implement and at least one sensor installed relative to the grading implement. The system may also include a light-emitting device configured to emit a light beam and a controller communicatively coupled to the sensor(s). The controller may include a processor and associated memory. The memory may store instructions that, when executed by the processor, configure the controller to receive sensor data from the sensor(s) associated with detecting the light beam emitted from the light-emitting device, determine a relative horizontal distance between the grading vehicle and the light-emitting device based on the sensor data, determine a relative worksite position of the grading vehicle at the worksite based on the relative horizontal distance, and actively adjust a position of the grading implement based on the relative worksite position of the grading vehicle to allow the worksite to be graded as the grading vehicle is moved relative to the light-emitting device across the worksite.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a grading vehicle in accordance with aspects of the present subject matter;
FIG. 2 illustrates a simplified view of one embodiment of a system for automatically grading a worksite in accordance with aspects of the present subject matter;
FIG. 3 illustrates a top view of the grading vehicle shown in FIGS. 1 and 2, particularly illustrating one embodiment of a sensor arrangement that may be utilized with sensor assemblies of the grading vehicle in accordance with aspects of the present subject matter;
FIG. 4 illustrates an example view of various different headings and/or locations of a grading vehicle relative to an associated light-emitting device in accordance with aspects of the present subject matter;
FIG. 5 illustrates a schematic, detailed view of one embodiment of a system for automatically grading a worksite in accordance with aspects of the present subject matter; and
FIG. 6 illustrates a flow diagram of one embodiment of a method for automatically grading a worksite in accordance with aspects of the present subject matter.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to systems and methods for automatically grading a worksite using a grading vehicle, such as bulldozer. Specifically, in several embodiments, the grading vehicle may include one or more sensor assemblies configured to detect characteristics of a light beam emitted from a light-emitting device positioned at the worksite that are indicative of the relative horizontal distance between the grading vehicle and the light-emitting device. For instance, the light-emitting device may correspond to a rotating laser configured to emit a laser beam across a horizontal plane. By determining the relative horizontal distance between the grading vehicle and the light-emitting device, a controller of the disclosed system may be configured to monitor the relative local position of the vehicle across the worksite (e.g., by determining a local set of x and y coordinates for the grading vehicle based on the relative horizontal distance between the grading vehicle and the light-emitting device). The relative local position of the grading vehicle may then be used to track the current position of the vehicle across a three-dimensional grading map associated with the worksite being graded, thereby allowing the controller to determine the desired surface grade for the worksite at each location traversed by the vehicle.

Based on the disclosure provided herein, it should be apparent to those of ordinary skill in the art that disclosed system and method allow for three-dimensional grading capabilities to be achieved without requiring complex and/or expensive system components, such as the components required in many conventional three-dimensional grading systems. For example, the present subject matter allows for the rotating laser of a conventional two-dimensional grading system to be utilized as an input for determining the relative local position of a grading vehicle across a worksite. As a result, the disclosed system and method may rely on simpler, less expensive components to achieve the desired three-dimensional grading capabilities.

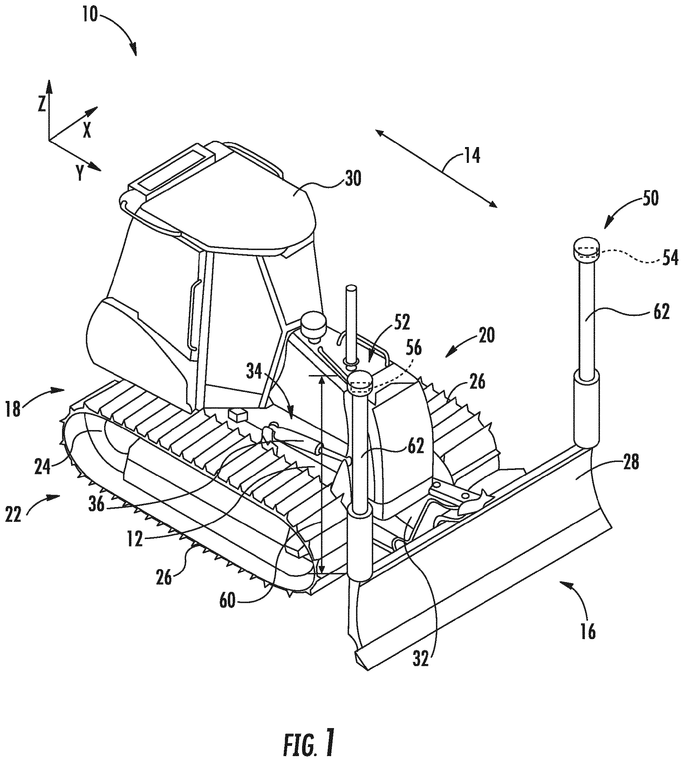

Referring now to the drawings, FIG. 1 illustrates a perspective view of one embodiment of a grading vehicle 10. As shown, the grading vehicle 10 is configured as a bulldozer or "dozer." However, in other embodiments, the grading vehicle 10 may be configured as any other suitable vehicle known in the art that is configured to perform grading operations, such as other suitable types of crawler-tractors.

In general, the grading vehicle 10 may include a chassis 12 extending longitudinally (e.g., as indicated by arrow 14 in FIG. 1) between a forward end 16 of the vehicle 10 and an aft end 18 of the vehicle 10. The chassis 12 may generally be configured to support various components of the grading vehicle 10. For example, an engine (not shown) of the vehicle 10 may be fixed to the chassis 12 for driving first and second drive systems 20, 22 of the vehicle 10, with each drive system 20, 22 including a drive wheel 24 rotationally coupled to the engine and an endless track 26 driven by the drive wheel 24. In addition, the chassis 12 may be configured to support a grading implement, such as a blade 28, at the forward end 16 of the vehicle 10 and an enclosed operator's cab 30 at the aft end 18 of the vehicle 10.

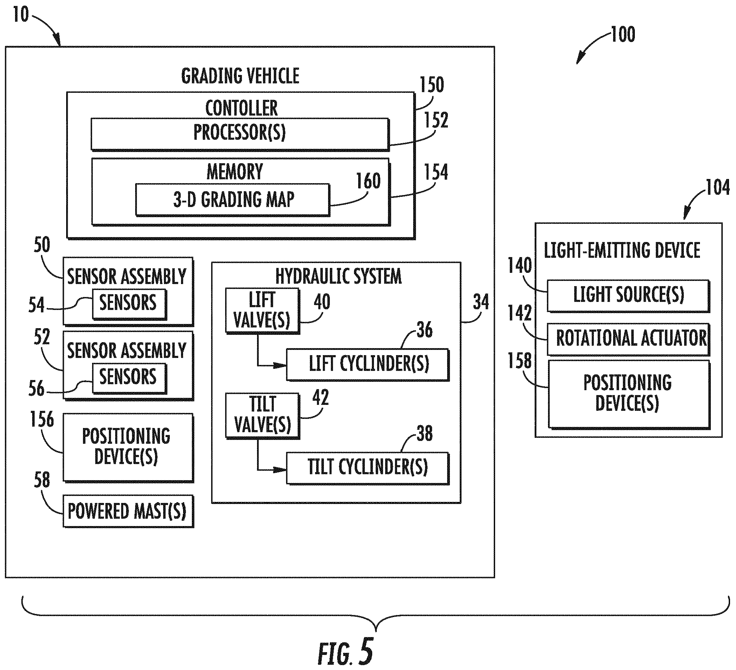

In several embodiments, the blade 28 may be configured to be pivotally coupled to the chassis 12 to allow the relative position of the blade 28 to be adjusted when performing a grading operation. For example, as shown in FIG. 1, in one embodiment, the blade 28 may be coupled to the chassis 24 via a pair of pivot arms 32. In such an embodiment, the grading vehicle 10 may also include a hydraulic system 36 including one or more hydraulic components for adjusting the position of the blade 28. For example, the vehicle 10 may include one or more actuators, such as one or more hydraulic lift cylinders 36, coupled between the pivot arms 32 and the chassis 12 to allow the position of the blade 28 to be adjusted relative to both the chassis 12 and the ground. For example, retraction/actuation of the lift cylinder(s) 36 may result in the pivot arms 332 pivoting relative to the chassis 12, thereby raising and lower the blade 28 relative to the ground. In addition, the vehicle 10 may also include one or more actuators, such as one more hydraulic tilt cylinders 38 (FIG. 5) configured to adjust the tilt angle or orientation of the blade 28 relative to the pivot arms 32. For example, the tilt cylinder(s) 38 may be coupled between the pivot arms 32 and the blade 28 to allow the blade 28 to be pivoted about a pivot point defined relative to the pivot arms 32.

Additionally, in several embodiments, one or more sensor assemblies 50, 52 may also be installed on the grading vehicle 10. For example, as shown in the illustrated embodiment, the grading vehicle 10 includes first and second sensor assemblies 50, 52 coupled to the blade 28 so as to be supported above the blade 28 at a location aligned with the opposed sides of the blade 28. However, in other embodiments, the grading vehicle 10 may include any other suitable number of sensor assemblies, such as a single sensor assembly or three or more sensor assemblies, with each sensor assembly being installed on the vehicle 10 at any suitable location that allows the sensor assembly to function as described herein.

As will be described in greater detail below, each sensor assembly 50, 52 may include one or more sensors (e.g., one or more first sensors 54 of the first sensor assembly 50 and one or more second sensors 56 of the second sensor assembly 52) configured to detect one or more characteristics of a light beam emitted from a light-emitting device positioned at the worksite. Specifically, in several embodiments, the characteristic(s) of the light beam detected by the sensors 54, 56 may be indicative of a relative horizontal distance between the sensor assemblies 50, 52 and the light-emitting device. In such embodiments, by continuously monitoring the relative horizontal distance between the sensor assemblies 50, 52 and the light-emitting device, the relative location of the grading vehicle 10 may be determined and tracked as it is moved across the worksite. The relative location of the grading vehicle 10 may, in turn, be used in combination with a three-dimensional grading map of the worksite to actively control the operation of the components of the hydraulic system 34 in a manner that positions of the blade 28 at the proper height and/or orientation relative to the ground for achieving the desired surface grade at each location across the worksite.

As shown in FIG. 1, each sensor assembly 50, 52 may be vertically supported relative to the grading vehicle 10 via a mast 58. In several embodiments, each mast 58 may be configured as a powered mast and, thus, may include suitable components for adjusting the vertical positioning of its respective sensor assembly 50, 52 relative to the blade 28, thereby allowing for a height 60 of each sensor assembly 50, 52 above the blade 28 to be varied. For instance, in one embodiment, each mast 58 may include a mast pole or arm 62 to which the respective sensor assembly 50, 52 is mounted. In such an embodiment, the mast arm 62 may, for example, be configured to be vertically actuated (e.g., via a worm gear arrangement or via hydraulic or pneumatic actuation) to allow the height 60 of the sensor assembly 50, 52 relative to the blade 28 to be adjusted. Alternatively, each mast arm 62 may be fixed relative to the blade 28. In such an embodiment, a suitable actuator or adjustment mechanism may be provided in operative association with each sensor assembly 50, 52 to allow the vertical position of each sensor assembly 50, 52 to be adjusted along the length of its respective mast arm 62.

It should be appreciated that the configuration of the grading vehicle 10 described above and shown in FIG. 1 is provided only to place the present subject matter in an exemplary field of use. Thus, it should be apparent that the present subject matter may be readily adaptable to any manner of grading vehicle configuration.

It should also be appreciated that, for purposes of discussion, the various directional references provided herein will generally be described relative to a Cartesian coordinate system, in which the z-axis generally extends in a vertical direction (i.e., a direction parallel to the direction of gravity at a given location) and the x- and y-axes generally extend in a horizontal plane that is perpendicular to the vertical direction. For example, the directional references may correspond to a local East, North, Up (ENU) Cartesian coordinate system in which the coordinates are defined relative to a plane tangent to the earth's surface fixed to a specific location such that the x-axis extends east/west, the y-axis extends north/south, and the z-axis extends up/down.

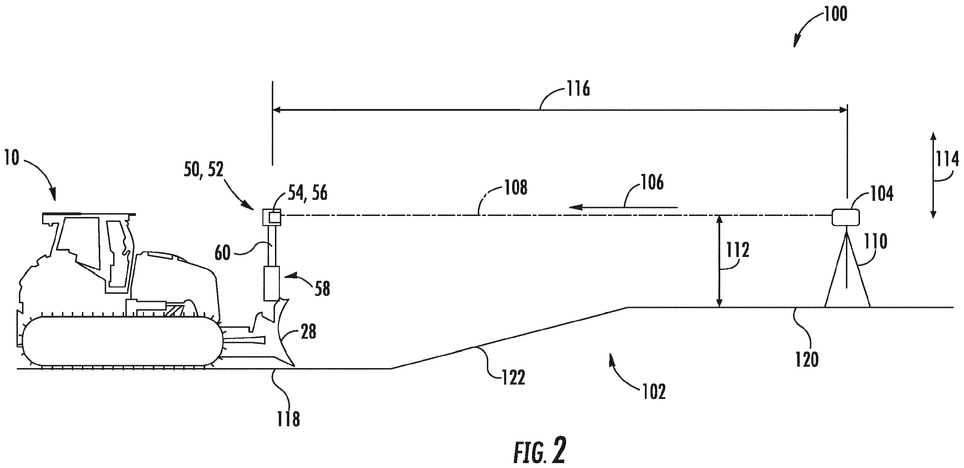

Referring now to FIG. 2, a simplified view of one embodiment of a system 100 for automatically grading a worksite 102 is illustrated in accordance with aspects of the present subject matter. For purposes of discussion the system 100 will be described herein with reference to grading vehicle 10 shown and described above with reference to FIG. 1. However, in general, the system 100 may be utilized with any grading vehicles have any suitable vehicle configuration.

As shown, the system 100 may include a light-emitting device 104 positioned at the worksite 102 for emitting one or more light beams (indicated by arrow 106) within a horizontal plane (indicated by line 108) extending generally perpendicular to the direction of gravity acting on the light-emitting device (e.g., a plane parallel to the x-y plane described above). For example, the light-emitting device 104 may be supported above the ground (e.g., via a tripod 110 or other suitable support assembly or device) such that the light-emitting device 104 is configured to emit a light beam 106 at a given height 112 relative to the ground. As a result, the light beam 106 emitted from the light-emitting device 104 may serve to provide a height reference for the grading operation in a vertical direction (e.g., as indicated by arrow 114) extending perpendicular to the horizontal plane 108 and generally parallel to the z-axis described above.

In several embodiments, the light-emitting device 104 may correspond to a rotating laser or other suitable rotating light source. In such embodiments, as the light-emitting device 104 is rotated, a light beam 106 may be emitted radially outwardly from the light-emitting device 104 across the horizontal plane 108. As such, with each rotation of the light-emitting device 104, the light beam 106 may be directed outwardly from the light-emitting device 104 across the horizontal plane 108 in a complete 360 degree circle.

As indicated above, the grading vehicle 10 may include one or more sensor assemblies 50, 52 installed relative to the grading vehicle 10, with each sensor assembly 50, 52 including one or more sensors 54, 56 for detecting one or more characteristics of the light beam 106 emitted from the light-emitting device 104. In several embodiments, the characteristic(s) of the light beam 106 detected by the sensors 54, 56 may be indicative of a relative horizontal distance 116 between the sensor assemblies 50, 52 and the light-emitting device 104 (e.g., a distance measured parallel to plane 108). By determining the relative horizontal distance 116 between the sensor assemblies 50, 52 and the light-emitting device 104, the relative position of the grading vehicle 10 along the horizontal plane 108 defined across the worksite 102 (e.g., the local x and y coordinates of the grading vehicle 10 at the worksite 102) may be calculated. For example, by knowing the position of the light-emitting device 104 relative to the worksite 102 (e.g., the local x and y coordinates of the light-emitting device 104) and/or by knowing at least one reference position of the grading vehicle 10 at the worksite (e.g., a given set of local x and y coordinates for the grading vehicle 10), the local position of the grading vehicle 10 across the worksite 102 may be continuously tracked as the relative horizontal distance 116 between the sensor assemblies 50, 52 and the light-emitting device 104 is being monitored. Thus, the combination of the sensor assemblies 50, 52 and the light-emitting device 104 may be utilized to determine the local relative position of the grading vehicle 10 within the worksite 102. As will be described below, such local position information may then be used to track the location of the grading vehicle 10 relative to a three-dimensional grading map for the worksite 102, thereby allowing the position of the blade 28 to be actively adjusted based on the position of the vehicle 10 within the map to allow the desired surface grade to be achieved across the worksite 102.

It should be appreciated that the sensors 54, 56 may generally be configured to detect any suitable characteristic(s) of the light beam 106 emitted from the light-emitting device 104 that allows for the relative horizontal distance 116 between the sensor assemblies 50, 52 and the light-emitting device 104 to be determined or calculated. For example, in one embodiment, the sensors 54, 56 may be configured to detect the light intensity of the light beam 106 emitted from the light-emitting device 106. In such an embodiment, since the magnitude of the light intensity will generally decrease with increases in the relative horizontal distance 116, a look-up table or mathematical expression may be developed that correlates the magnitude of the light intensity to the relative horizontal distance 116. Thus, by detecting the light intensity each time the light beam 106 rotates across the sensors 54, 56, the relative horizontal distance 116 between the sensor assemblies 50, 52 and the light-emitting device 104 may be monitored.

In another embodiment, the sensors 50, 52 may be configured to provide sensor data (e.g., a time stamp) indicative of the time differential at which the light beam 106 is detected by each sensor 50, 52. For example, as the light-emitting device 104 is rotated, the light beam 106 emitted from the device 104 may be detected at differing times by separates sensors 54, 56 of the sensor assemblies 50, 52 (e.g., separate sensors 54, 56 of the same assembly 50, 52 or separate sensors 54, 56 across both assemblies 50, 52) as the beam 106 rotates across the assemblies 50, 52. Thus, by knowing the speed of light, the rotational speed of the light-emitting device 104, and the spacing or distance between the sensors 54, 56 detecting the light beam 106 at different times, the relative position of the light-emitting device 104 to the sensor assemblies 50, 52 (and, thus, the relative horizontal distance 116) can be determined (e.g., via triangulation).

It should also be appreciated that, in general, the sensors 54, 56 may correspond to any suitable sensing devices configured to function as described herein. For example, in one embodiment, each sensor 54, 56 may include one or more photodetectors, such as one or more photodiodes or phototransistors (including an array of photodiodes and/or phototransistors), configured to detect the light beam 106 as it strikes each sensor 54, 56 with rotation of the light-emitting device 104. In such an embodiment, in addition to simply detecting the light beam 106, the photodetector(s) may also detect or provide an output indicative of the magnitude of the light intensity of the light beam 106. For instance, the resistance of the photodetector(s) may vary as the light intensity varies. Thus, by establishing a correlation between the photodetector resistance and light intensity, the intensity of the light beam106 may be detected via the photodetector(s). As indicated above, such light intensity measurements may then be correlated to the relative horizontal distance 116 between the sensor assemblies 50, 52 and the light-emitting device 104.

Moreover, as indicated above, each sensor assembly 50, 52 may, in several embodiments, be supported relative to the blade 28 via a powered mast 58. In such embodiments, as the grading vehicle 10 is moved across the worksite 102 while performing the grading operation, the operation of the powered masts 58 may be controlled to maintain the sensor assemblies 50, 52 vertically aligned with the horizontal plane 108 across which the light beam 106 is emitted from the light-emitting device 104 such that the light beam 106 remains in the line-of-sight of the sensors 54, 56. For instance, in the illustrated embodiment, with the grading vehicle positioned at a lower surface grade (e.g., indicated by line 118) relative to the higher surface grade on which the light-emitting device 104 is supported (e.g., indicated by line 120), the mast arms 62 may be actuated to relatively raised positions to allow the sensor assemblies 50, 52 to be maintained in alignment with the light beam 106. However, as the grading vehicle 10 moves up or down an inclined surface, the operation of the powered masts 62 may be controlled to increase or decrease the height of the sensor assemblies 50, 52 relative to the ground as necessary to maintain alignment with the light beam 106. For instance, in the illustrated embodiment, as the grading vehicle 10 moves across the upwardly inclined surface (e.g., indicated by line 122), the operation of the powered masts 62 may be controlled so as to lower the sensor assemblies 50, 52, thereby reducing their height relative to the ground. As will be described below, the capabilities of the powered masts 62 in varying the vertical position of the sensor assemblies 50, 52 may, for example, be taken into account when determining whether the desired range of surface grades for a given worksite 102 is compatible with the vertical travel range of the powered masts 62.

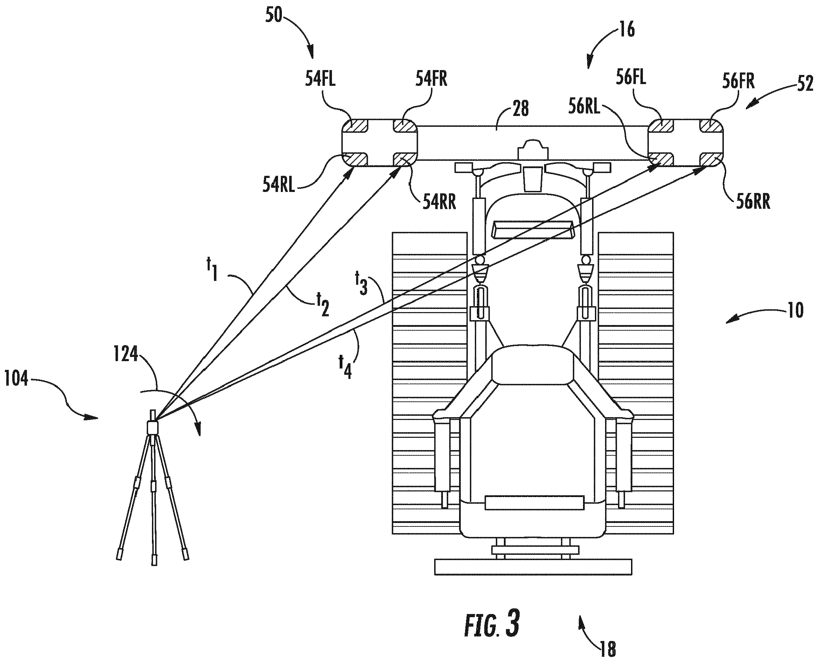

Referring now to FIG. 3, one embodiment of a sensor arrangement that may be utilized with the disclosed sensor assemblies 50, 52 is illustrated in accordance with aspects of the present subject matter. As shown, each sensor assembly 50, 52 includes four separate sensors 54, 56. Specifically, in the illustrated embodiment, each sensor assembly 50, 52 includes a pair of sensors facing in the direction of the forward end 16 of the vehicle 10 and a pair of sensors facing in the direction of the aft end 18 of the vehicle 10, with each pair of sensors being disposed on opposed lateral sides of their respective sensor assembly 50, 52. For purposes of describing the sensor arrangement, the sensors 54 of the first sensor assembly 50 will be identified as follows: forward left sensor 54FL, forward right sensor 54FR, rear left sensor 54RL, and rear right sensor 54RR. Similarly, the sensors 56 of the second sensor assembly 52 will be identified as follows: forward left sensor 56FL, forward right sensor 56FR, rear left sensor 56RL, and rear right sensor 56RR.

With the sensor arrangement shown in FIG. 3, the light beam emitted from the light-emitting device 104 may be detected by one or more of the sensors 54, 56 of each sensor assembly 50, 52 based on the orientation or heading of the grading vehicle 10 relative to the light-emitting device 104. For instance, in the illustrated embodiment, the grading vehicle 10 is oriented relative to the light-emitting device 104 such that the light beam strikes the aft or rear sensors 54RL, 54RR, 56RL, 56RR of each sensor assembly 50, 52. Additionally, given the rotation of the light-emitting device 104, the light beam will strike different sensors at different times as it is rotated across the sensor assemblies 50, 52. For example, given the rotation path of the light beam indicated by arrow 124 in FIG. 3, the light beam will initially strike the rear left sensor 54RL of the first sensor assembly 50 at time t₁ following by the rear right sensor 54RR of the first sensor assembly 50 at time t₂. As the light beam is further rotated across the rotation path, the light beam will then strike the rear left sensor 56RL of the second sensor assembly 52 at time t₃ following by the rear right sensor 56RR of the second sensor assembly 52 at time t₄. In such an embodiment, by knowing the speed of light and the rate at which the light beam is being rotated by the light-emitting device 104, the relative position of the light-emitting device 104 (and, thus, the relative horizontal distance 116 (FIG. 2) between the device 104 and each sensor assembly 50, 52) may be triangulated based on the time differential and spacing between each relevant sensor detecting the light beam.

As indicated above, in addition to determining the relative horizontal distance 116 between the light-emitting device 104 and the sensor assemblies 50, 52 based on the time differential between sensor detections (or as an alternative thereto), such distance 116 may, instead, by calculated based on the light intensity detected by each sensor 54, 56. In such an embodiment, each sensor 54, 56 that detects the light beam may provide an indication of the light intensity of the light beam, thereby allowing multiple intensity measurements to be obtained to increase the overall accuracy of the resulting distance calculation or estimation.

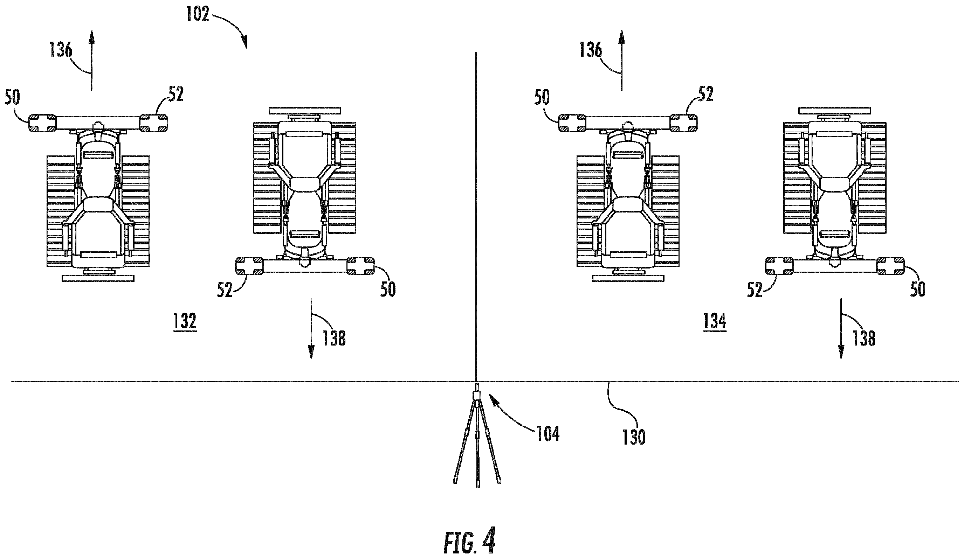

Using the sensor arrangement shown in FIG. 3, it should be appreciated that, by identifying the which side of each sensor assembly 50, 52 is struck by the rotating light beam in combination with determining the relative horizontal distance 116 between each sensor assembly 50, 52 and the light-emitting device 104, both the heading of the grading vehicle 10 and its location relative to the light-emitting device 104 can be determined. For example, FIG. 4 illustrates the light-emitting device 104 positioned at a boundary 130 of a worksite 102 such that a first worksite area 132 is located to the left of the light-emitting device 104 and a second worksite area 134 is located to the right of the light-emitting device 104. Within each worksite area 132, 134, the grading vehicle 10 is shown oriented at both a first heading 136 relative to the light-emitting device 104 (i.e., with the rear end 18 of the vehicle 10 facing towards the device 104) and a second heading 138 relative to the light emitting device 104 (i.e., with the forward end 16 of the vehicle 10 facing towards the device 104). In such an embodiment, by identifying which side of each sensor assembly 50, 52 the sensor strikes are occurring and by determining which sensor assembly 50, 52 is located closer to the light-emitting device 104, it can be determined which heading the grading vehicle 10 has relative to the light-emitting device 104 and in which worksite area 132, 134 the grading vehicle 10 is currently located. For example, the chart below identifies both the sensors struck by the light beam (e.g., the front sensors or the rear sensors) and the specific sensor assembly 50, 52 that is located closest to the light-emitting device 104 for each worksite area/heading combination shown in FIG. 4. As shown in the chart, when the grading vehicle 10 is located within one of the worksite areas 132, 134, the side of each sensor assembly 50, 52 across which the light beam is detected will differ depending on the heading of the vehicle 10. For instance, when the vehicle 10 is located within the first worksite area 132, the light beam will be detected by the rear sensors of each sensor assembly 50, 52 when the grading vehicle 10 is oriented at the first heading 136 relative the light-emitting device 104, while the light beam will be detected by the front sensors of each sensor assembly 50, 52 when the vehicle 10 is oriented at the second heading 138 relative the light-emitting device 104. In addition, when the grading vehicle 10 is oriented at a given heading 136, 138 relative to the light-emitting device 104, the sensor assembly 50, 52 closest to the light-emitting device 104 will differ depending on which worksite area 132, 134 the vehicle 10 is located. For instance, when the vehicle 10 is oriented at the first heading 136 relative to the light-emitting device 104, the second sensor assembly 52 will be located closest to the light-emitting device 104 when the vehicle 10 is positioned within the first worksite area 132, while the first sensor assembly 50 will be located closest to the light-emitting device 104 when the vehicle 10 is positioned within the second worksite area 134.

**Chart 1: Sensor detections for each area/heading combination**

| Worksite Area - Heading | Sensors Struck by Beam | Assembly Closest to Device |
|---|---|---|
| First Area - First Heading | Rear Sensors | Second Sensor assembly |
| First Area - Second Heading | Front Sensors | First Sensor Assembly |
| Second Area - First Heading | Rear Sensors | First Sensor Assembly |
| Second - Second Heading | Front Sensors | Second Sensor assembly |

It should be appreciated that the sensor arrangement shown and described above with reference to FIGS. 3 and 4 is simply illustrated to provide one example of a suitable sensor arrangement that may be utilized in accordance with aspects of the present subject matter. Thus, it should be apparent that the present subject matter may be readily adaptable to various different sensor arrangements and/or configurations.

Referring now to FIG. 4, a schematic view of a specific embodiment of a system 100 for automatically grading a worksite is illustrated in accordance with aspects of the present subject matter. In general, the system 100 will be described with reference to the various system components described above, such as the grading vehicle 10, the sensor assemblies 50, 52, and the light-emitting device 104. However, in other embodiments, the system 100 may be implemented with any other suitable system components, including any other suitable type of grading vehicle, sensor assembly and/or light-emitting device configured to function in a manner consistent with the description provided herein.

As shown in FIG. 5, the system 100 may generally include the grading vehicle 10 and the light-emitting device 104 described above with reference to FIGS. 1-4. Thus, the grading vehicle 10 may include, for example, first and second sensor assemblies 50, 52, with each sensor assembly 50, 52 including one or more sensors 54, 56 configured to detect one or more characteristics of the light beam emitted from the light-emitting device 104. Additionally, as shown in FIG. 5, the system 100 may also include various components of the vehicle's hydraulic system 34, such as one or more lift cylinders 36 for raising and lowering the blade 28 relative to the chassis 12 and one or more tilt cylinders 38 for pivoting the blade 28 relative to the pivot arms 32. In such an embodiment, the hydraulic system 34 may also include one or more control valves for regulating the flow of hydraulic fluid to each cylinder 36, 38, such as one or more lift control valves 40 for controlling the flow of hydraulic fluid to the lift cylinders 36 and one or more tilt control valves 42 for controlling the flow of hydraulic fluid to the tilt cylinders 38.

Additionally, as shown in FIG. 5, the light-emitting device 104 may generally include a light source 140, such as a laser light source, and a rotational actuator 142 for rotating the light source 140 to allow the light beam emitted therefrom to be rotated 360 degrees. For instance, in one embodiment, the rotational actuator 142 may correspond to a motor rotationally coupled to the light source 140. In such an embodiment, the motor 142 may, for example, be configured to rotate the light source 140 at a constant rotational speed.

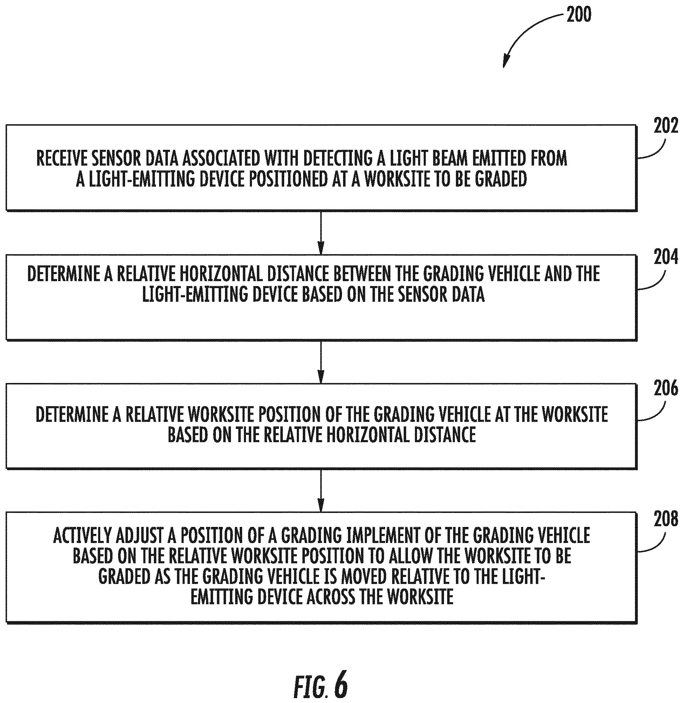

Moreover, as shown in FIG. 5, the system 100 may also include a controller 150 provided in operative association with the grading vehicle 10 that is configured to electronically control the operation of one or more components of the grading vehicle 10, such as the operation of one or more of the hydraulic components of the vehicle's hydraulic system 34 and/or the operation of the vehicle's powered masts 58. In general, the controller 150 may comprise any suitable processor-based device known in the art, such as a computing device or any suitable combination of computing devices. Thus, in several embodiments, the controller 150 may include one or more processor(s) 152 and associated memory device(s) 154 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 154 of the controller 150 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 154 may generally be configured to store suitable computer-readable instructions that, when implemented by the processor(s) 152, configure the controller 150 to perform various computer-implemented functions, such as by performing one or more of the aspects of the method 200 described below with reference to FIG. 6. In addition, the controller 150 may also include various other suitable components, such as a communications circuit or module, one or more input/output channels, a data/control bus and/or the like.

It should be appreciated that the controller 150 may correspond to an existing controller of the grading vehicle 10 or the controller 150 may correspond to a separate processing device. For instance, in one embodiment, the controller 150 may form all or part of a separate plug-in module that may be installed within the grading vehicle 10 to allow for the disclosed system and method to be implemented without requiring additional software to be uploaded onto existing control devices of the vehicle 10.

In several embodiments, the controller 150 may be configured to be coupled to suitable components for controlling the operation of the various cylinders 36, 38 of the grading vehicle 10. For example, as shown in FIG. 5, the controller 150 may be communicatively coupled to the control valves 40, 42 configured to control the supply of hydraulic fluid to each cylinder 36, 38. In such an embodiment, hydraulic fluid may be supplied to the control valves 40, 42 from a fluid tank (not shown) mounted on and/or within the grading vehicle 10 (e.g., via a pump (not shown)). The controller 150 may then be configured to control the operation of each valve 40, 42 in order to control the flow of hydraulic fluid supplied to each of the cylinders 36, 38. For instance, the controller 150 may be configured to transmit suitable control commands to the lift control valves 40 in order to regulate the flow of hydraulic fluid supplied to the cap and rod ends of each lift cylinder 36, thereby allowing the controller 150 to adjust the vertical positioning of the blade 28 as the pivot arms 32 are pivoted relative to the vehicle's chassis 12. Similarly, the controller 150 may be configured to transmit suitable control commands to the tilt control valves 42 in order to regulate the flow of hydraulic fluid supplied to the cap and rod ends of each tilt cylinder 38, thereby allowing the controller 150 to adjust the orientation of the blade 28 relative to the pivot arms 32.

Additionally, as shown in FIG. 5, the controller 150 may also be communicatively coupled to each of the sensor assemblies 50, 52, thereby allowing the signals or measurements generated by the sensors 54, 56 to be transmitted to the controller 150 for subsequent processing and/or analysis. Specifically, in several embodiments, the controller 150 may be configured to analyze the data received from the sensors 54, 56 to determine the relative horizontal distance 116 (FIG. 2) between the sensor assemblies 50, 52 and the light-emitting device 104. For example, as indicated above, the sensor data may be correlated to the relative horizontal distance 116 based on one or more characteristics of the light beam detected by the sensors 54, 56, such as the light intensity of the light beam and/or the time differential between sensor detections as the light beam is rotated across the sensor assemblies 50, 52.

Additionally, by determining the relative horizontal distance 116 between the sensor assemblies 50, 52 and the light-emitting device 104, the controller 150 may also be configured to determine the relative local position of the grading vehicle 10 at the worksite. For example, in one embodiment, the controller 150 may be provided with at least one position input associated with the current location of the grading vehicle 10m and/or the location of the light-emitting device 104 relative to the worksite, such as a set of local x and y coordinates for the grading vehicle 10 and/or the local x and y coordinates associated with the fixed location of the light-emitting device 104. In such an embodiment, by knowing the current position of the grading vehicle 10 and/or the fixed position the light-emitting device 104, the grading vehicle 10 may be configured to continuously monitor and update its position across the worksite by analyzing the sensor data received from the sensor assemblies 50, 52. For example, assuming that the controller 150 is provided with a set of initial or starting x and y coordinates of the grading vehicle 10 relative to the worksite, the controller 150 may be configured to determine the current relative horizontal distance 116 between itself and the light-emitting device 104 when positioned at such set of local x and y coordinates based on the data received from the sensor assemblies 50, 52 as the light beam is detected via the sensors 54, 56. Thereafter, as the grading vehicle 10 is moved across the worksite, the controller 150 may be configured to update the relative worksite position of the grading vehicle 10 by continuously monitoring the relative horizontal distance 116 between the vehicle 10 and the light-emitting device 104. In addition, as indicated above, the heading of the grading vehicle 10 may also be monitored by identifying which set of sensors 54, 56 (e.g., the front sensors or the rear sensors) are currently detecting the light beam emitted from the light-emitting device 104.

It should be appreciated that, in one embodiment, the reference position input(s) associated with the current location of the grading vehicle 10 and/or the location of the light-emitting device 104 relative to the worksite may be received from the operator of the grading vehicle 10. For example, the operator may be allowed to manually input the location of the grading vehicle 10 and/or the location of the light-emitting device 104 relative to the worksite via one or more input devices provided in the operator's cab 30. Alternatively, the controller 150 may be communicatively coupled to one or more positioning devices configured to transmit the position input(s) to the controller 150. For example, as shown in FIG. 5, a vehicle positioning device 156 may be located on and/or within the grading vehicle 10 for providing a reference input associated with the current location of the grading vehicle 10. In such an embodiment, the vehicle positioning device 156 may, for instance, correspond to a GPS-enabled device located on and/or within the grading vehicle 10, such as a built-in or integrated GPS device of the vehicle 10 and/or a separate GPS-enabled device (e.g., a portable GPS-equipped device, such as a smartphone or tablet, carried by the operator or otherwise located within the grading vehicle 10).

In addition to the vehicle positioning device 156 (or as an alternative thereto), a light positioning device 156 may be located on, within, and/or adjacent to the light-emitting device 104 for providing an input associated with the location of the light-emitting device 104. In such an embodiment, the light positioning device 158 may, for instance, correspond to a GPS-enabled device located on, within, and/or adjacent to the light-emitting device 104, such as a built-in or integrated GPS device of the light-emitting device 104 and/or a separate GPS-enabled device (e.g., a portable GPS-equipped device, such as a smartphone or tablet, located at or adjacent to the light-emitting device 104).

Moreover, in accordance with aspects of the present subject matter, a three-dimensional grading map 160 may be stored within the controller's memory 154 that defines or prescribes the desired grade at each location across the worksite. For instance, the three-dimensional grading map 160 may include a desired grade (e.g., a z-coordinate) for each set of local x and y coordinates within the worksite. Such map 160 may, for example, be created in anticipation of performing the grading operation at the worksite and may then be transmitted or otherwise loaded into the controller's memory 154 prior to starting the operation. The controller 150 may then access and reference the three-dimensional map 160 during the performance of the grading operation to actively control the position of the blade 28 to achieve the desired grade at each location across the worksite as the grading vehicle 10 is moved across such location. Specifically, by continuously monitoring the relative position of the grading vehicle 10 via the sensor data provided by the sensors 54, 56, the controller 150 may track the position of the grading vehicle 10 across the three-dimensional grading map 160. Thus, as the grading vehicle 10 is moved across the worksite, the controller 150 may cross-reference the grading map 160 to determine the desire grade for the current location of the grading vehicle 10 and/or for any upcoming location(s) to be traversed by the vehicle 10 (e.g., as determined based on the current position and heading of the vehicle 10). The controller 150 may then actively control the appropriate components of the hydraulic system 34 (e.g., the lift control valves 40 and/or the tilt control valves 42 to control the operation of the lift cylinders 36 and/or tilt cylinders 38, respectively) to adjust the position of the blade 28 relative to the ground in a manner that allows the desired surface grade to be achieved as prescribed by the three-dimensional grading map 160.

In several embodiments, it may be desirable to cross-reference the range of surface grades prescribed for the worksite within three-dimensional grading map 160 to the associated capabilities of the powered masts 58. For example, if the vertical range encompassed by the desired range of surface grades for the worksite is greater than the vertical range of movement of the powered masts 58, the masts 58 will not be able to maintain the sensor assemblies 50, 52 aligned with the light beam emitted from the light-emitted device 104 as the grading vehicle 10 is moved across locations within the worksite at which the desired surface grade is at the top end and/or bottom end of the desired range of surface grades. In such instance, the controller 150 may be configured to provide a notification to the operator (e.g., a visual or audible notification) indicating that the desired range of surface grades exceeds the vertical range of movement of the powered masts 58. The operator may then have the option of reducing the desired range of surface grades or may request that a new three-dimensional grading map be developed that is consistent with the capabilities of the powered masts 58.

Referring now to FIG. 6, one embodiment of a method 200 for automatically grading a worksite is illustrated in accordance with aspects of the present subject matter. In general, the method 200 will be described with reference to the grading vehicle 10 and the system 100 described above with reference to FIGS. 1-5. However, it should be appreciated by those of ordinary skill in the art that the disclosed method 200 may generally be utilized when performing a grading operation using a grading vehicle having any other suitable vehicle configuration and/or as part of any system have any other suitable system configuration. In addition, although FIG. 6 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 6, at (202), the method 200 includes receiving sensor data associated with detecting a light beam emitted from a light-emitting device positioned at a worksite to be graded. For example, as indicated above, the controller 150 may be configured to receive sensor data from the sensor assemblies 50, 52 when the light beam emitted by the light-emitting device 104 is detected by the associated sensors 54, 56.

Additionally, at (204), the method 200 includes determining a relative horizontal distance between the grading vehicle and the light-emitting device based on the sensor data. Specifically, in several embodiments, the controller 150 may be configured to analyze the data received from the sensors 54, 56 to determine the relative horizontal distance 116 (FIG. 2) between the sensor assemblies 50, 52 and the light-emitting device 104. For example, as indicated above, the sensor data may be correlated to the relative horizontal distance 116 based on one or more characteristics of the light beam detected by the sensors 54, 56, such as the light intensity of the light beam and/or the time differential between sensor detections as the light beam is rotated across the sensor assemblies 50, 52.

Moreover, at (206), the method 200 includes determining a relative worksite position of the grading vehicle at the worksite based on the relative horizontal distance. For instance, as described above, the controller 150 may be configured to continuously monitor the relative local position of the grading vehicle 10 across the worksite based, at least in part, on the current relative horizontal distance calculated between the sensor assemblies 50, 52 and the light-emitting device 104. By doing so, the controller 150 may also be configured to continuously track and update the vehicle's position relative to the three-dimensional grading map 160 of the worksite.

Referring still to FIG. 6, at (208), the method 200 includes actively adjusting a position of a grading implement of the grading vehicle based on the relative worksite position to allow the worksite to be graded as the grading vehicle is moved relative to the light-emitting device across the worksite. Specifically, by continuously tracking and updating the vehicle's position relative to the three-dimensional grading map 160, the controller 150 may reference the map 160 to determine the desired surface grade for each location of the vehicle 10 as it is moved across the worksite. The controller 150 may then control the operation of one or more components of the vehicle's hydraulic system 34 (e.g., the lift control valves 40 and/or the tilt control valves 42 to control the operation of the lift cylinders 36 and/or tilt cylinders 38, respectively) to adjust the position of the blade 28 relative to the ground in a manner that allows the desired surface grade to be achieved as prescribed by the three-dimensional grading map 160.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method (200) for automatically grading a worksite (102) using a grading vehicle (10), the method (200) including receiving, with a computing device (150), sensor data associated with detecting a light beam (106) emitted from a light-emitting device (104) positioned at the worksite (102), the sensor data being received from at least one sensor (54, 56) installed on the grading vehicle (10), the method (200) being **characterized by**:
determining, with the computing device (150), a relative horizontal distance (116) between the grading vehicle (10) and the light-emitting device (104) based on the sensor data;
determining, with the computing device (150), a relative worksite position of the grading vehicle (10) at the worksite (102) based on the relative horizontal distance (116); and
actively adjusting, with the computing device (150), a position of a grading implement (28) of the grading vehicle (10) based on the relative worksite position of the grading vehicle (10) to allow the worksite (102) to be graded as the grading vehicle (10) is moved relative to the light-emitting device (104) across the worksite (102).

2. The method (200) as in claim 1, wherein the sensor data is associated with a light intensity of the light beam (106) emitted from the light-emitting device (104), wherein determining the relative horizontal distance (116) between the grading machine (10) and the light-emitting device (104) comprises determining the relative horizontal distance (116) based on a magnitude of the light intensity of the light beam (106).

3. The method (200) as in any preceding claim, wherein the at least one sensor (54, 56) comprises a first sensor (54) and a second sensor (56) and wherein the sensor data is indicative of a time differential between when the light beam (102) was detected by the first and sensor sensors (54, 56), wherein determining the relative horizontal distance (116) between the grading machine (10) and the light-emitting device (104) comprises determining the relative horizontal distance (116) based on the time differential between sensor detections.

4. The method (200) as in any preceding claim, wherein the light-emitting device (104) corresponds to a rotating laser source disposed at a fixed location at the worksite (102).

5. The method (200) as in any preceding claim, further comprising accessing, with the computing device (150), a three-dimensional grading map (160) associated with the worksite (102), the three-dimensional grading map (160) including a prescribed surface grade for a plurality of different locations across the worksite (102).

6. The method (200) as in claim 5, wherein determining the relative worksite position of the grading vehicle (10) comprises determining the relative worksite position of the grading machine within the three-dimensional grading map (160).

7. The method (200) as in claim 6, wherein actively adjusting the position of the grading implement (28) comprises actively adjusting the position of the grading implement (28) based on the relative worksite position of the grading machine (10) within the three-dimensional grading map (160) to allow the worksite (102) to be graded in accordance with the prescribed surface grade for the plurality of different locations across the worksite (102).

8. The method (200) as in claim 5, further comprising receiving, with the computing device (150), at least one position input associated with a reference position of at least one of the grading machine (10) or the light-emitting device (104) at the work site (102).

9. The method (200) as in claim 8, wherein determining the relative worksite position of the grading vehicle (10) comprises determining the relative worksite position of the grading machine (10) within the three-dimensional grading map (160) based on the relative horizontal distance (116) and the reference position of the at least one of the grading machine (10) or the light-emitting device.

10. The method of claim 8, wherein the at least one position input is received from a positioning device located on or within the grading machine or located at a known position relative to the light-emitting device (104).

11. The method (200) as in any preceding claim, wherein the at least one sensor (54, 56) forms part of a sensor assembly (50, 52) supported relative to the grading vehicle (10) via a powered mast (58), further comprising controlling the operation of the powered mast (58) to adjust a vertical location of the sensor assembly (50, 52) relative to the ground to maintain the at least one sensor (54, 56) aligned with the light beam (106) emitted from the light-emitting device (104).

12. A system (100) for automatically grading a worksite (102), the system (100) including a grading vehicle (10), the grading vehicle (10) including a grading implement (28) and at least one sensor (54, 56) installed relative to the grading implement (28), the system (100) further including a light-emitting device (104) configured to emit a light beam (106) and a controller (150) communicatively coupled to the at least one sensor (54, 56), the controller (150) including a processor (152) and associated memory (154), the memory (154) storing instructions that, when executed by the processor (152), configure the controller (150) to receive sensor data from the at least one sensor (54, 56) associated with detecting the light beam (106) emitted from the light-emitting device (104), the system (100) being **characterized by** the controller (150) being configured to:
determine a relative horizontal distance (116) between the grading vehicle (10) and the light-emitting device (104) based on the sensor data;
determine a relative worksite position of the grading vehicle at the worksite (102) based on the relative horizontal distance (116); and
actively adjust a position of the grading implement (28) based on the relative worksite position of the grading vehicle (10) to allow the worksite (102) to be graded as the grading vehicle (10) is moved relative to the light-emitting device (104) across the worksite (102).

13. The system (100) as in claim 12, wherein the computer (150) is configured to access a three-dimensional grading map (160) associated with the worksite (102), the three-dimensional grading map (160) including a prescribed surface grade for a plurality of different locations across the worksite (102).

14. The system (100) as in claim 13, wherein the controller (150) is further configured to determine the relative worksite position of the grading machine within the three-dimensional grading map (160).
The system (100) as in claim 14, wherein the controller (150) is configured to actively adjust the position of the grading implement (28) based on the relative worksite position of the grading machine (10) within the three-dimensional grading map (160) to allow the worksite (102) to be graded in accordance with the prescribed surface grade for the plurality of different locations within the worksite (102).
